# EUROPÄISCHE PATENTSCHRIFT

(11) **EP 2 361 702 B1**
(45) Veröffentlichungstag und Bekanntmachung des Hinweises auf die Patenterteilung: **08.03.2017**
(21) Anmeldenummer: 11151902.1
(22) Anmeldetag: 24.01.2011
(51) Int. Cl.: B21K 5/10, B23B 51/02

(54) **Herstellungsverfahren für ein Einsteckende**
Method for producing an insertion end
Procédé de fabrication pour une extrémité enfichable

(30) Priorität: 22.02.2010 DE 102010002167
(43) Veröffentlichungstag der Anmeldung: 31.08.2011
(73) Patentinhaber: HILTI Aktiengesellschaft, 9494 Schaan (LI)
(72) Erfinder: Traxler, Thomas, 6836, Viktorsberg (AT); Domani, Günther, 6820, Frastanz (AT); Schoerken, Christian, 9496, Balzers (LI); Anschütz, Frank, 9494, Schaan (LI); Schütz, Gerhard, 6824, Schlins (AT); Weisser, Gernot, 86343, Königsbrunn (DE)
(74) Vertreter: Hilti Aktiengesellschaft Corporate Intellectual Property

(56) Entgegenhaltungen:
- EP-A1- 2 181 783
- DE-A1- 19 915 303
- DE-A1-102006 041 273
- DE-U1- 8 433 275
- US-A- 5 421 682

## Beschreibung

### GEBIET DER ERFINDUNG

Die vorliegende Erfindung betrifft ein Herstellungsverfahren für ein Einsteckende, insbesondere für ein Einsteckende eines bohrenden, meißelnden oder bohrmeißelnden Werkzeugs.

Aus der DE 3745046 C ist ein für heutige Bohrer geläufiges Einsteckende bekannt. Das im wesentlichen zylindrische Einsteckende hat zwei gegenüberliegende geschlossene Längsnuten. In die geschlossenen Längsnuten können Verriegelungselemente einer Werkzeugaufnahme eingreifen und den Bohrer gegen ein Herausfallen aus der Werkzeugaufnahme sichern. Das Einsteckende weist ferner eine oder mehrere einseitig offene Längsnuten auf. Ein axiales, offenes Ende der offnen Längsnut schließt mit der Stirnseite des Einsteckendes ab. Das Einsteckende kann über eine in die offene Längsnut verzahnend eingreifende Drehmitnahme der Werkzeugaufnahme geschoben werden.

DE 84 33 275 U1 beschreibt ein Herstellungsverfahren für Bohrer, an deren Einsteckenden durch Schmieden oder Fließpressen zum Schaftende offene Längsnuten eingebracht werden und die offenen Enden der Längsnuten durch einen Stauchprozess geschlossen werden.

### OFFENBARUNG DER ERFINDUNG

Die Erfindung betrifft ein Herstellungsverfahren gemäß Anspruch 1 für ein Einsteckende, insbesondere für ein Einsteckende eines abtragenden, z.B. bohrenden, meißelnden oder bohrmeißelnden, Werkzeugs.

Das Verfahren ermöglicht ohne spanende Verfahrenschritte die geschlossenen Längsnuten für eine Verriegelung eines bohrenden, meißelnden oder bohrmeißelnden Werkzeugs herzustellen. Das umschließende Matrizenwerkzeug erhält die Form der Längsnut, bis auf deren Endabschnitt. Bei dem im in axialer Richtung wirkenden Stauchen auf die freie relativ große Stirnfläche kann erstaunlicherweise trotz der massiven Form des Rohlings ausreichend Material des Endstücks in radialer Richtung verschoben werden, um die Längsnut zu verschließen.

Das Matrizenwerkzeug greift mit einem Formkörper in die Längsnut ein, wobei der Formkörper kürzer als die Längsnut ist. Ferner kann der Formkörper bis auf den offenen Endabschnitt die Längsnut formschlüssig ausfüllen.

Bei dem Herstellungsverfahrens wird eine weitere Längsnut in die Mantelfläche geformt, welche einen offenen Endabschnitt an der Stirnfläche erhält. In die weitere Längsnut greift das Matrizenwerkzeugs ein, wobei das Matrizenwerkzeug die weitere Längsnut vollständig mit einem Formkörper ausfüllt. Die weitere Längsnut wird vorzugsweise in einem Verfahrensschritt, z.B. durch Fließpressen, mit der Längsnut geformt.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: einen Bohrer;
- Fig. 2: einen Rohling;
- Fig. 3: den Rohling mit eingeprägten Längsnuten;
- Fig. 4: einen Querschnitt durch den Rohling von Fig. 3 entlang der Ebene IV-IV;
- Fig. 5: einen Längsschnitt eines Matrizenwerkzeugs mit eingelegtem Rohling von Fig. 3;
- Fig. 6: wie Fig. 5 nur um 90 Grad um die Achse gedreht;
- Fig. 7: Querschnitt in der Ebene VII-VII von Fig. 5;
- Fig. 8: Querschnitt in der Ebene VIII-VIII von Fig. 5;
- Fig. 9: einwirkendes Stempelwerkzeug,
- Fig. 10: Querschnitt durch das Stempelwerkzeug in der Ebene X-X von Fig. 9.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

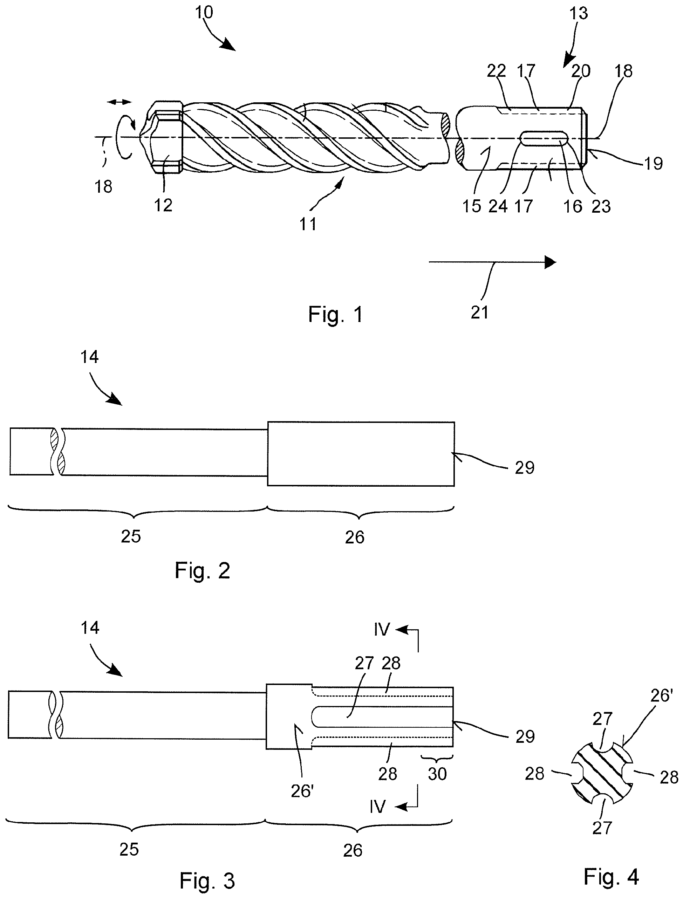

Fig. 1 zeigt einen beispielhaften Bohrer **10,** welcher insbesondere für einen bohrmeißelnden Abbau von Gestein oder Baumaterialien geeignet ist. Der Bohrer **10** hat einen Schaft **11,** welcher beispielhaft zu einer Wendel geformt ist. An einem Ende des Schafts **11** ist ein Bohrkopf **12** angebracht. Während der Schaft **11** aus Stahl gefertigt ist, kann der Bohrkopf **12** für höhere Abbauleistung aus einem Hartmetall (Carbid) gefertigt sein. An dem anderen Ende des Schafts **11** ist ein Einsteckende **13** ausgebildet. Wie nachfolgend ausgeführt, bestehen Schaft **11** und Einsteckende **13** aus dem selben Stahl und werden aus einem Rohling **14** hergestellt.

Das Einsteckende **13** basiert vorzugsweise auf einem zylindrischen Grundkörper. In eine Mantelfläche **15** des Einsteckendes **13** sind zwei geschlossene Längsnuten **16** und zwei einseitig offene Längsnuten **17** geformt. Die Längsnuten **16, 17** sind mit ihrer jeweils längsten Ausdehnung parallel zu einer Achse **18** des Einsteckendes **13** ausgerichtet. Die einseitig offene Längsnut **17** erstreckt sich bis zu einer Stirnfläche **19** des Einsteckendes **13,** wodurch ein Endabschnitt **20** der offenen Längsnut **17** in axialer Richtung **21** von keinem Material des Einsteckendes **13** umgeben ist, d.h. in axialer Richtung **21** offen ist. Der andere axiale Endabschitt **22** der offenen Längsnut **17** ist vorzugsweise in axialer Richtung **21** durch Material des Einsteckendes **13** begrenzt, d.h. geschlossen. Die axialen Endabschnitte **23, 24** der geschlossenen Längsnut **16** sind beide geschlossen und in axialer Richtung durch Material des Einsteckendes umgeben. Die Anzahl und Winkelanordnung der Längsnuten **16, 17** ist nur beispielhaft, insbesondere die Anzahl der Längsnuten **17** kann kleiner oder größer sein.

Die einseitig offenen Längsnuten **17** und die geschlossenen Längsnuten **16** sind ohne spanende Verfahrenschritte, z.B. Fräsen, hergestellt.

Ausgangspunkt für den Bohrer **10** kann ein zylindrischer Rohling **14** sein. Der Rohling **14** wird beispielsweise von einem Stahldraht geeigneten Durchmessers abgeschnitten. Der Durchmesser des Stahldrahts entspricht vorzugsweise dem größten Durchmessers des herzustellenden Bohrers **10.** In dem dargestellten Beispiel orientiert sich der Durchmesser an dem Durchmesser des Einsteckendes **13,** welcher größer als der des Durchmessers des Schafts **11** ist. In einem nicht-spanenden Umformungsprozess wird der Abschnitt **25** des Rohlings **14** für den Schaft **11** auf den benötigten Durchmesser reduziert, z.B. durch Fließpressen, Rollwalzen. Der umgeformte Rohling hat nun ein Endstück **26** das der Grundkörper für das späterer Einsteckende **13** bildet und den typischerweise deutlich längeren Abschnitt **25** für den späteren Schaft **11** (Fig. 2). Der Durchmesser des Endstücks **26** kann geringfügig angepasst werden, falls dies z.B. zu Kalbrationszwecken notwendig ist. Der Durchmesser des Endstücks **26** kann größer als 1 cm, 1,7 cm sein. Falls bei einem anderen Bohrer **10** der Durchmesser des Schafts **11** größer als der des Einsteckendes **13** ist, wird entsprechend der Durchmesser des Rohlings **14** auf den Durchmesser des Einsteckendes **13** reduziert.

In das Endstück **26** des Rohlings **14** werden durch Fließpressen erste Längsnuten **27** und zweite Längsnuten **28** in eine Mantelfläche **33** geformt. Bei dem Fließpressen wird das Endstück **26** beginnend mit einer Stirnfläche **29** durch ein ringförmig Werkzeug gepresst. Die Kontur der Innenseite des ringförmigen Werkzeugs überträgt sich dabei auf das Endstück **26** und aufgrund der geeignet gewählten Kontur bilden sich die offenen Längsnuten **27, 28** aus. Die Längsnuten **27, 28** können mit einem einzigen ringförmigen Werkzeug zusammen oder mit zwei oder mehr ringförmigen Werkzeugen nacheinander geformt werden. Der umgeformte Rohling **14** ist in einer Seitenansicht (Fig. 3) und einem Querschnitt in der Ebene IV-IV senkrecht zur Achse **18** (Fig. 4) dargestellt. Alle Längsnuten **27, 28** erstrecken sich bis zu einer freiliegenden Stirnfläche **29** des Endstücks **26,** wodurch sie einen offenen Endabschnitt **30** erhalten. Die Längsnuten **27, 28** können verschiedene Querschnitte und anders als dargestellt eine unterschiedliche Länge entlang der Achse **18** aufweisen.

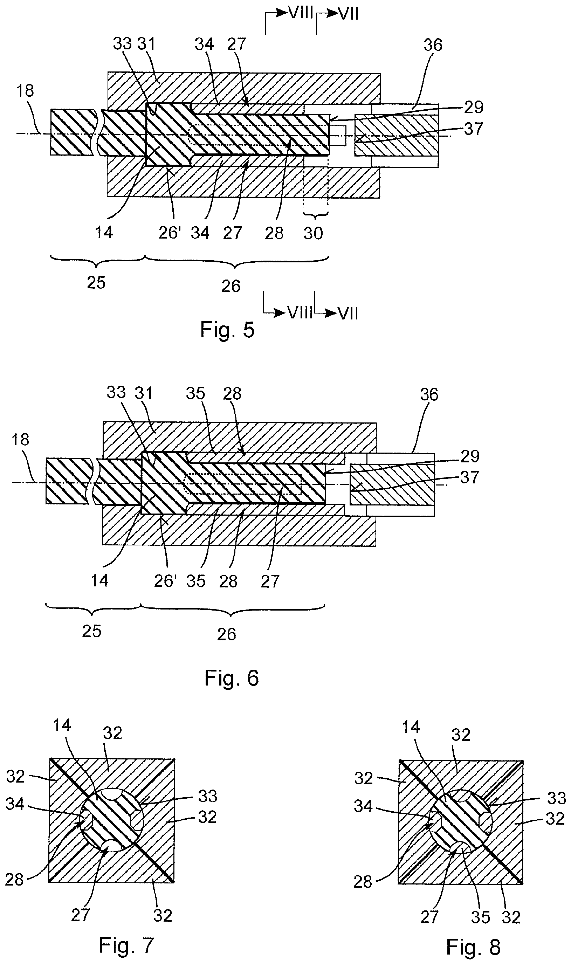

Der Rohling **14** mit den Längsnuten **27, 28** wird in ein segmentiertes oder mehrgliedriges Matrizenwerkzeug **31** eingesetzt. Fig. 5 und Fig. 6 zeigen um 90 Grad zueinander um die Achse **18** gedrehte Längsschnitte durch das Matrizenwerkzeug **31** mit dem eingesetzten Rohling **14.** Fig. 7 und Fig. 8 zeigen zwei Querschnitte senkrecht zur Achse **18** durch Matrizenwerkzeug **31** und Rohling **14** bezogen auf Fig. 5 in unterschiedlichen axialen Positionen in den Ebenen VII-VII bzw. VIII-VIII.

Das Matrizenwerkzeug **31** hat vorzugsweise mehrere Segmente **32,** welche an die Mantelfläche **26'bz** des Endstücks **26** angelegt werden und das Endstück **26** ringförmig und bündig mit dessen Mantelfläche **26'bz** umschließen. Vorzugsweise ist das Endstück **26** entlang seiner axialen Ausdehnung vollständig von den Segmenten **32** eingeschlossen. Vorzugsweise umschließt das Matrizenwerkzeug **31** das Endstück **26** oder den Rohling **14** auch in axialer Richtung. Die innere Kontur **33** der Segmente **32** kann im Wesentlichen hohlzylindrisch sein, von der nach innen erste Formkörper **34** und zweite Formkörper **35** vorspringen. Die Formkörper **34, 35** sind der Form der Längsnuten **27, 28** derart angepasst, dass sie in die Längsnuten **27, 28** vollständig eingreifen können, während die innere Kontur **33** bündig an der Mantelfläche **26'** des Endstücks **26** anliegt. Die Formkörper **34, 35** sind länglich entlang der Achse **18** und ihr Querschnitt kann dem Querschnitt der Längsnuten **27, 28** entsprechen.

Der erste Formkörper **34** lässt den offenen, axialen Endabschnitt **30** der ersten Längsnut **27** frei (vgl. Fig. 7). Der Endabschnitt **30** bleibt beispielsweise auf einer axialen Länge im Bereich von 5 mm bis 15 mm und vorzugsweise über den gesamten Querschnitt der Längsnut **27** frei. Die anderen Abschnitte der Längsnut **27** können vollständig von dem ersten Formkörper **34** ausgefüllt sein.

Der zweite Formkörper **35** füllt, im Gegensatz zu dem ersten Formkörper **34,** den offenen, axialen Endabschnitt **30** der zweiten Längsnut **28** aus. Vorzugsweise füllt der zweite Formkörper **35** die zweite Längsnut **28** vollständig aus, wodurch die Seitenflächen des zweiten Formkörpers **35** formschlüssig an den Seitenflächen der Längsnut **28** anliegen. Die Länge des zweiten Formkörpers **35** kann dazu wenigstens die Länge der zweiten Längsnut **28** aufweisen, wobei die Länge entlang der Achse **18** bestimmt wird. Bevorzugt wird ein zweiter Formkörper **35,** der die Stirnfläche **19** längs der Achse **18** überragt, z.B. ist der zweite Formkörper **35** länger als die zweite Längsnut **28.**

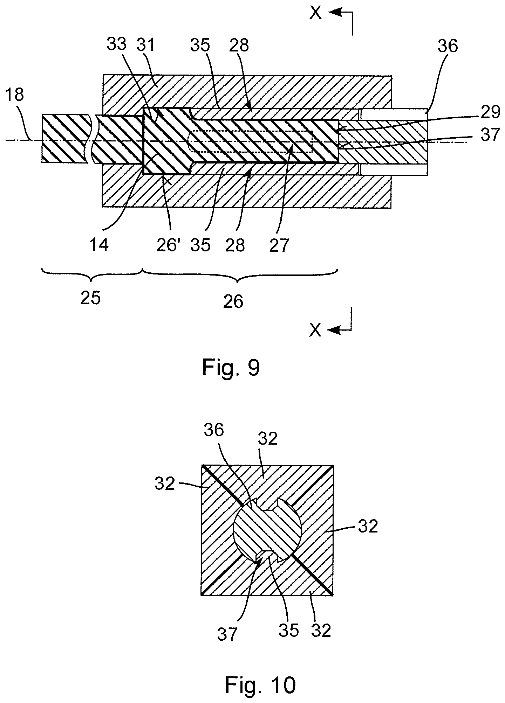

Ein Stempelwerkzeug **36** wird auf die freiliegende Stirnfläche **29** des Endstücks **26** gepresst (Fig. 9). Fig. 10 zeigt das Stempelwerkzeug **36** im Querschnitt zur Achse **18.** In einer Ausführungsform hat das Stempelwerkzeug **36,** wie in Fig. 8 dargestellt, eine ebene oder konkave Stempelfläche **37.** Die Stempelfläche **37** übt einen über die Stirnfläche **29** gleichmäßigen Druck längs der Achse **18** aus. Der aufgewandte Druck liegt im Bereich von 10.000 bar bis 100.000 bar. Das Endstück **26** wird gestaucht. Da das Endstück **26** umfänglich durch das Matrizenwerkzeug **31** umschlossen ist, kann das Material dem Druck nicht ausweichen und in radialer Richtung nachgeben. Der Hohlraum gebildet durch den Endabschnitt **30** der ersten Längsnut **27,** welcher nicht durch ersten Formkörper **34** ausgefüllt ist, ermöglicht eine Aufnahme des verschobenen Materials. Durch das Ausfüllen des Endabschnitts **30** wird die vormals einseitig offene, erste Längsnut **27** geschlossen. Die zweite Längsnut **28** hingegen bleibt offen, da deren Endabschnitt **30** durch den zweiten Formkörper **35** ausgefüllt ist.

Das Stempelwerkzeug **36** kann Längsnuten **37** aufweisen, deren Winkelposition und Querschnitt im Wesentlichen dem Querschnitt der zweiten Längsnuten **28** entspricht. Die überstehenden zweiten Formkörper **35** können in die Längsnuten **37** des Stempelwerkzeugs **36** eingreifen, wenn dieses Stempelwerkzeug **36** gegen die Stirnfläche **29** gepresst wird.

Der prozessierte Rohling **14** hat nun ein Einsteckende **13,** das nun wenigstens eine geschlossene Längsnut **16** gebildet aus der ersten Längsnut **27** und eine offene Längsnut **17** gebildet aus der zweiten Längsnut **28** aufweist. Der prozessierte Rohling **14** kann weiterverarbeitet werden. Der Schaft **11** kann z.B. durch Walzen, Spanen oder Schmieden zu einer Wendel geformt werden. Ein Bohrkopf **12** wird auf den Schaft **11** aufgesetzt und durch Löten oder Schweißen befestigt.

## Patentansprüche

1. Herstellungsverfahren für ein Einsteckende, insbesondere für eine Einsteckende eines bohrenden, meißelnden oder bohrmeißelnden Werkzeugs, mit den Schritten:
Formen einer Längsnut (27) in eine Mantelfläche (26') eines Endstücks (26) eines Rohlings (14), wobei die Längsnut (27) mit einem offenen Endabschnitt (30) an einer Stirnfläche (29) des Endstücks (26) geformt wird,
Formen eine weitere Längsnut (28) mit einem offenen Endabschnitt (30) an der Stirnfläche (29) in die Mantelfläche (26')
Umschließen der Mantelfläche (26') des Endstücks (26) mit einem Matrizenwerkzeug (31), das mit einem Formkörper (34), der in die Längsnut (27) außerhalb deren offnen Endabschnitts (30) eingreift und der Formkörper (34) längs einer Achse (18) des Rohlings (14) kürzer als die Längsnut (27) ist, und das mit einem weitere Formkörper (35) in die weitere Längsnut (28) eingreift, wobei der weitere Formkörper (35) die weitere Längsnut (35) vollständig ausfüllt,
Verschließen des offenen Endabschnitts (30) der Längsnut (27) durch Stauchen des umschlossenen Endstücks (26) mittels eines Stempels (36), der auf die Stirnfläche (29) wirkt.

2. Herstellungsverfahren nach Anspruch 1, wobei der Formkörper (34) bis auf den offenen Endabschnitt (30) die Längsnut (27) formschlüssig ausfüllt.

3. Herstellungsverfahren nach Anspruch 1, **dadurch gekennzeichnet, dass** die Längsnut (27) und die weitere Längsnut (28) in einem Verfahrensschritt geformt werden.

4. Herstellungsverfahren nach Anspruch 1, **dadurch gekennzeichnet, dass** die Längsnut (27) und die weitere Längsnut (28) durch Fließpressen in die Mantelfläche (26') geformt werden.

## Claims

1. Method of producing an insertion end, in particular the insertion end of a drilling, chiselling or drilling/chiselling tool, comprising the steps:
forming a longitudinal groove (27) in an outer surface (26') of an end piece (26) of a blank (14), the longitudinal groove (27) being formed with an open end section (30) on an end face (29) of the end piece (26),
forming a further longitudinal groove (28) with an open end section (30) on the end face (29) in the outer surface (26'),
surrounding the outer surface (26') of the end piece (26) with a die (31) engaging by means of a moulded part (34) in the longitudinal groove (27) outside its open end section (30), the moulded part (34) being shorter than the longitudinal groove (27) along an axis (18) of the blank (14), and engaging by means of a further moulded part (35) in the further longitudinal groove (28), the further moulded part (35) completely filling the further longitudinal groove (28), and
closing the open end section (30) of the longitudinal groove (27) by compressing the surrounded end piece (26) by means of a punch (36) acting on the end face (29).

2. Production method according to claim 1, in which the moulded part (34) fills the longitudinal groove (27) in a positive manner up to the open end section (30).

3. Production method according to claim 1, **characterised in that** the longitudinal groove (27) and the further longitudinal groove (28) are formed in one step.

4. Production method according to claim 1, **characterised in that** the longitudinal groove (27) and the further longitudinal groove (28) are formed in the outer surface (26') by extrusion.

## Revendications

1. Procédé de fabrication pour une extrémité enfichable, en particulier pour une extrémité enfichable d'un outil à percer, à buriner ou à percer-buriner, comportant les étapes consistant à :
former une rainure longitudinale (27) dans une surface extérieure (26') d'une pièce d'extrémité (26) d'une ébauche (14), la rainure longitudinale (27) étant formée avec une partie d'extrémité ouverte (30) sur une surface avant (29) de la pièce d'extrémité (26),
former une autre rainure longitudinale (28) avec une partie d'extrémité ouverte (30) sur la surface avant (29) dans la surface extérieure (26'),
entourer la surface extérieure (26') de l'la pièce d'extrémité (26) avec un outil matrice (31) muni d'un corps moulé (34) s'engageant dans la rainure longitudinale (27) à l'extérieur de sa partie d'extrémité ouverte (30) et le corps moulé (34) le long d'un axe (18) de l'ébauche (14) étant plus court que la rainure longitudinale (27), et lequel outil matrice s'engage dans un corps moulé supplémentaire (35) dans une rainure longitudinale supplémentaire (28), dans lequel le corps moulé supplémentaire (35) remplit entièrement la rainure longitudinale supplémentaire (35),
fermer la partie d'extrémité ouverte (30) de la rainure longitudinale (27) en comprimant, au moyen d'un poinçon (36) qui agit sur la surface avant (29), la pièce d'extrémité (26) entourée.

2. Procédé de fabrication selon la revendication 1, dans lequel le corps moulé (34) remplit la rainure longitudinale (27) par complémentarité de formes jusqu'à la partie l'extrémité ouverte (30).

3. Procédé de fabrication selon la revendication 1, **caractérisé en ce que** la rainure longitudinale (27) et la rainure longitudinale supplémentaire (28) sont formées dans une étape de procédé.

4. Procédé de fabrication selon la revendication 1, **caractérisé en ce que** la rainure longitudinale (27) et la rainure longitudinale supplémentaire (28) sont formées par extrusion dans la surface extérieure (26').
